Europäisches Patentamt

(19) European Patent Office

Office européen des brevets

(11) Publication number: **0 348 199**
**A1**

# (12) EUROPEAN PATENT APPLICATION

(21) Application number: **89306316.4**

(22) Date of filing: **22.06.89**

(51) Int. Cl.⁴: **C 08 J 9/14**
//(C08L61/06,71:02)

(30) Priority: **23.06.88 GB 8814914**

(43) Date of publication of application:
**27.12.89 Bulletin 89/52**

(84) Designated Contracting States:
**AT BE CH DE ES FR GB IT LI NL SE**

(71) Applicant: **BP Chemicals Limited**
**Belgrave House 76 Buckingham Palace Road**
**London, SW1W 0SU (GB)**

(72) Inventor: **Barcroft, Michael Andrew BP Chemicals**
**Limited**
**Hayes Road Sully**
**Penarth South Glamorgan, CF6 2YU Wales (GB)**

**Johnstone, David Roger BP Chemicals Limited**
**Hayes Road Sully**
**Penarth South Glamorgan, CF6 2YU Wales (GB)**

(74) Representative: **Krishnan, Suryanarayana Kalyana et al**
**BP INTERNATIONAL LIMITED Patents & Agreements**
**Division Chertsey Road**
**Sunbury-on-Thames Middlesex TW16 7LN (GB)**

(54) A process for producing phenolic foams.

(57) This invention relates to phenolic foams of low thermal conductivity derivable from a phenolic resin, a hardener, a cell stabilizer, a solvent and a blowing agent comprising dichlorotrifluoroethane or dichlorofluoroethane and to a process for producing the same. The blowing agent is more user friendly than agents used hitherto with regard to the adverse effect of conventional CFC's on the ozone layer.

**Description**

## A PROCESS FOR PRODUCING PHENOLIC FOAMS

This invention relates to a process for producing phenol-formaldehyde foams, hereafter referred to as phenolic foams, having low thermal conductivity.

Phenolic foams are finding increasing use in building applications where their thermal insulation and fire resistant properties are of value. The preparation of such phenolic foams has been previously described and involves mixing a phenol formaldehyde resin of the type known in the art as a resole with a blowing agent, a cell stabiliser and a hardener which is typically a mineral or strong organic acid. The mixed ingredients are usually poured into a mould which is then placed in a warm oven to foam, cure and set. Alternatively, the mixed ingredients can be converted to cured foam in a continuous process, for example, by depositing the mixed ingredients onto a moving belt.

A particular method of producing closed cell phenolic foams of low thermal conductivity is claimed and described in our published European Patent Application No. 0170357.

In the prior art process it is conventional to use the fully substituted chlorofluorohydrocarbons (also known generically as CFC's and commercially sold as "Freons" (Registered Trade Mark)) as blowing agents. The most widely used Freon is trichlorofluoromethane (also known as CFC11 or Freon 11). Freon 11 is used either alone or in combination with other Freons such as Freon 12, 13, 13 B1, 14, 22, 113, 114 (CFC114), 500, 502 or 503 or a series of halogenated hydrocarbons sold under the trade name ARCTON (Registered Trade Mark). The preferred agent with most phenolic foam systems is a mixture of Freon 11 (CFC11) and Freon 113 (CFC113) (trichlorotrifluoroethane). Use of such blowing agents is described in EP 170357, GB 2125045, GB 2055845, EP 066967 and USP 4133931

Recently, concern has been expressed regarding the possible adverse effects of CFC's on the protective ozone layer surrounding the earth's atmosphere. It is believed that hydrogenated CFC's (also known as HCFC's), which are partially halo-substituted hydrocarbons, present less risk than the CFC's. However attempts to use such HCFC's e.g. dichlorotrifluoroethanes (HCFC 123) on its own or in combination with other CFC's e.g. CFC 113 in these formulations produced foams which showed poor thermal conductivity (k) stability i.e. the cells quickly became filled with air. HCFC 123, for instance, is markedly more soluble in the resin than e.g. CFC 11 as is noted in the Allied Signal's European Patent Application No. 0229877. This reference stresses the need for the HCFC to be highly soluble in the foam system.

A major reason for seeking to minimise the use of the hitherto accepted CFC blowing agents is their effect on the environment especially the ozone layer. Some idea of the relative Ozone Depletion Potential (ODP) of the CFC's and HCFC's can be gauged from the following Table.

If CFC-11 is arbitrarily chosen to have an ODP of 1.0, then,

| Blowing Agent | ODP |
| --- | --- |
| CFC-11 | 1.0 |
| CFC-113 | 0.8 |
| CFC-114 | 0.8 |
| HCFC-141B | 0.1 |
| HCFC-123 | 0.02 |

Thus HCFC 123 is about 50 times less harmful to the ozone layer than CFC-11.

From the above, it is apparent that HCFC's should replace CFC's as blowing agent in phenolic foams. However, this replacement is not a simple matter. We have found that, in a normal blowing process, at temperatures above the boiling point of the neat blowing agent, there is evidence of interaction between the blowing agent and the resin.

This interaction is related to the solubility of the blowing agent in the resin. This effect has to be overcome before the blowing agent can be volatilised to perform its blowing function. The concentration of the blowing agent in the resin at which the foam rise temperature equals the boiling point of the blowing agent is the solubility limit tolerable for the agent. The non-soluble portion of the agent provides the initial foam rise as the resin cures and produces heat. However, the soluble portion of the blowing agent volatilises at a higher temperature and therefore some time later on in the foaming reaction. If this volatilisation occurs at a critical stage during the reaction, imperfect closed-cells will result with a consequent increase in k-value and poor k-stability.

Thus it has been found that contrary to the teaching of EPA-029877 referred to above, the solubility of the blowing agent in the resin has to be minimised to produce closed cell foams of low thermal conducitivity.

It has also been found surprisingly that by choosing a specific combination of solvent, cell stabiliser and resin together with an HCFC, the processing and performance of these phenolic foams can be significantly improved at the same time reducing any attendant environmental risks.

Accordingly, the present invention comprises phenolic foams of low thermal conductivity derivable from a foam system comprising a phenolic resin, a blowing agent, a hardener, a cell stabiliser and a solvent compatible with the resin, characterised in that the blowing agent comprises a partially halogenated hydrocarbon selected from dichlorotrifluoroethane (HCFC 123) and dichlorofluoroethane (HCFC 141B).

According to a further embodiment, the present invention comprises a process for the production of phenolic foams of low thermal conductivity by curing a foam system comprising a phenolic resin, a blowing agent, a hardener, a cell stabiliser and a solvent compatible with the resin, characterised in that the blowing agent comprises a partially halogenated hydrocarbon selected from dichlorotrifluoroethane (HCFC 123) dichlorofluoroethane (HCFC 141B), and the cell stabilizer comprises an alkoxylated derivative of

     (a) unmodified or

     (b) hydrogenated, whether fully or partially, castor oil whereby the foam system is such that the HCFC blowing agent has relatively low solubility in the phenolic resin.

The phenol-formaldehyde resins also known as 'resoles' can be prepared by condensing 1 mole of a phenolic compound with 1 to 2.5 moles of an aldehyde using a base catalyst, e.g. sodium hydroxide. The phenolic compound may be substituted or unsubstituted and may be selected from one or more of phenol, the cresols, whether orth-, meta-, para- or mixtures thereof, e .g. nonyl phenols, styrenated phenols and bromophenols. The aldehyde is suitably formaldehyde or furfurylaldehyde. The resoles are preferably prepared by condensing 1 mole of phenol with 1.2 or 1.8 moles of formaldehyde.

Dichlorotrifluoroethane or dichlorofluoroethane (and their positional isomers) are commercially sold respectively as HCFC 123 and (HCFC 141B), for convenience will hereafter be referred to by said trade name.

The HCFC blowing agents described above embrace also their positional isomers for the purposes of the present invention. It can be used as such alone or as blends thereof with other CFC's such as e.g. CFC 11, CFC 113 and CFC 114 provided that such blends contain at least 30% w/w of the HCFC. Within these limits the precise amount of blowing agent used will depend upon a number of factors such as the density and strength of the foam required, the production technique and the type of phenolic resin used.

The solvent chosen is such that the HCFC blowing agent has a relatively low solubility in the phenolic resin. By low solubility is meant that the solubility of the blowing agent is less than 5% w/w in the resin.

Examples of such solvents include dialkyl carbonates, e.g. dimethyl carbonates and the esters, especially the diesters e.g. the dimethyl and diethyl esters of dicarboxylic acids such as carbonic, malonic, succinic, fumaric, adipic, glutaric, sebacic and/or suberic acids. A mixture of esters can be prepared directly by the esterification of a mixture of these acids. For instance, a mixture of adipic, glutaric and succinic acids which contain these acids in a molar ratio range of 1:2-4.5 : 0.33-1.5 respectively is sold commercially and can be esterified. A blend of dimethyl esters of succinic, glutaric and adipic acids in a weight ratio of 15-25 : 55-65 : 10-20 respectively is preferred.

The phenolic resins may incorporate during their preparation conventional additives to improve the performance of the foam. Examples of such additives include one or more of urea, melamine, dicyandiamide and furfurylalcohol which serve e.g. to mop up excess formaldehyde in the resin.

The solvents referred to above can be used either during the preparation of the phenolic resin or during the foaming of the resin. Broadly, the solvents may be used to control the viscosity of the resin, to control the foaming process and to impart desirable properties to the foam.

For the purposes of the present invention, it will be understood by those skilled in the art that phenolic resins of relatively higher viscosity may be used as starting materials. It is however convenient to use a phenolic resin which inherently contains a compatible solvent and has a viscosity of 1000-10000 centistokes. The phenolic resin (resole) used suitably has a viscosity of 1000 to 8000 centistokes, preferably 1000-5000 centistokes at 25°C.

The hardener is suitably an aqueous mineral acid, preferably aqueous sulphuric acid or phosphoric acid, most preferably an aqueous solution containing 45-65% by weight of sulphuric acid. The total compatible solvent content of the reaction mixture inclusive e.g. of the water or other solvents present in the phenolic resin and the water present in the aqueous hardener used is suitably from 7 to 35% by weight, preferably from 15-32% by weight. Of the total solvent at least 40% by weight is water,, preferably at least 50% by weight is water.

Castor oil is a glyceride in which the glycerol is esterified predominantly with ricinoleic acid. The cell stabilizer is prepared from castor oil as such or from a hydrogenated derivative thereof. The hydrogenated derivative may be either fully or partially hydrogenated with respect to the unsaturation in the ricinoleic acid moiety in castor oil. Thus, castor oil or its hydrogenated derivative can be alkoxylated e.g. with ethylene oxide or in some instances with mixtures thereof with small amounts of propylene oxide and/or butylene oxide. The alkoxylated castor oil derivative contains suitably from 40-80 ethylene oxide units per mole of castor oil, preferably from 50 to 60 ethylene oxide units per mole of castor oil.

The curing reaction is exothermic and the resin and the hardener are chosen depending upon the nature of the final end product and the production technique to be used. Larger surface to volume ratios result in increased rates of cooling of the mass. Consequently, the combination of resin and hardener chosen will depend to a large extent upon the surface to volume ratio of the desired foam. Thus, for producing a thin laminate which has large surface to volume ratio and hence a relatively fast cooling rate, a resin hardener system may be chosen which releases more exothermic heat than the combination chosen for a large block. It is essential that the temperature within the mass of the curing resin mixture is optimised. Too high a temperature leads to cell damage that allows the blowing agent to escape and thus the low thermal conductivity advantage is lost, probably due to the excessive pressure of the cell gases. Too low a temperature leads to a system that is slow curing and thus economically unacceptable. Therefore the optimum temperature profile has the temperature just below that which would result in cell damage throughout the curing process. Curing in all foam processes continues for a considerable time after the product has been demoulded, or, in the case of laminated foam, has come out of the conveyor press. This is often referred to as the post curing phase. It is essential that the temperature within the mass of the curing resin mixture does not exceed 85°C for at least 6 hours after the curing phase has been initiated and is preferably from 55 to 85°C.

The process of the present invention enables closed cell foams with the following properties to be produced:

(i) values significantly less than 0.020 W/(m.K) tested as shown below in the passage under Table 2 of this specification

(ii) improved processability, and

(iii) lower stress in finished foam.

The mixing, foaming and curing of the ingredients can be carried out by any of the methods currently employed either batchwise or continuously.

The invention is illustrated by the following Examples.

General Procedure

Example 1 and comparative Tests 1 and 2

All quantities are weight for weight unless otherwise stated.

A. Resin Preparation

A phenolic resole was prepared in the conventional way. Aqueous formaldehyde (36.6%) (1.5 moles) was reacted with phenol (1 mole) using as a catalyst sodium hydroxide (1.23% by weight of phenol charged).

The reaction mixture was heated to 60°C over a 45 minute period and held at 60°C for 30 minutes. The temperature was carefully increased to 80°C and held for 30 minutes at 80°C. The temperature was again increased to permit a 45 minute reflux period. Water was then vacuum distilled to give a material with water content of 20%. It was then held at 70°C to give a material with a viscosity of 3338 centistokes at 25°C.

B. Block Foam Preparation:

The following resin formulations, in which all components listed are parts by weight, were used to prepare the block foams:-

Table 1

| Formula-tion | Com-parative Test 1 | Com-parative Test 2 | Example 1 |
|---|---|---|---|
| Phenol formaldehyde resin (from Section A above) | 100 | 100 | 100 |
| Diethylene glycol | 4.35 | 4.35 | / |
| Nylonate Ester | / | / | 4.35 |
| Castor oil ethoxylate X | / | / | 2.18 |
| Castor oil ethoxylate Y | 2.18 | 2.18 | / |
| Castor oil ethoxylate Z | 2.18 | 2.18 | 2.18 |
| CFC 113 | 12.0 | 12.3 | 11.5 |
| CFC 11 | / | 6.2 | / |
| HCFC-123 | 6.0 | / | 7.5 |
| Acid curing agent | 17.4 | 17.4 | 17.4 |

Nylonate Ester - A solvent mixture of dimethyl succinate (15-25% w/w), dimethyl glutarate (55-65% w/w) and dimethyl adipate (10-20% w/w).

X - Cell stabilizer, contains 54 moles of ethylene oxide per mole of castor oil.

Y - Cell stabilizer, contains 40 moles of ethylene oxide per mole of castor oil.

Z - Cell stabilizer, contains 50 moles of ethylene oxide and 15 moles of propylene oxide per mole of castor oil.

CFC 113 - Trichlorofluoroethane blowing agent.

CFC 11 - Trichlorotrifluoromethane blowing agent.

HCFC-123 - Dichlorotrifluoroethane blowing agent.

HCFC-141B - 1,1,1-dichlorofluoroethane.

Block foams were prepared from all the above formulations 1-5 in the following manner:-
        (a) Phenolic resole shown in Table 1 above was heated to 30°C, and the blowing agents added. The materials were mixed for 2 minutes to form an emulsion.
        (b) The acid curing agent [a mixture of sulphuric acid (50% aqueous solution) and ortho-phosphoric acid (85% aqueous solution) in the ratio of 10:6 respectively] was added to the emulsion from (a) above and mixed for $1^1/_2$ minutes. The above mixture was then poured into a mould, 50 cm x 50 cm x 50 cm, pre-heated to 45°C, and placed in an oven at 55°C for 2 hours.

Table 2

| Foam from Formulation | Density | k-value (30 days) | Compressive Strength | Friability (%) |
|---|---|---|---|---|
| Comparative Test 1 | 47.6/40.50 | >0.020 | 190 | 23.0 |
| Comparative Test 2 | 44.2/35.9 | <0.020 | 195 | 20.5 |
| Example 1 | 43.5/36.0 | <0.020 | 204 | 24.1 |

In Table 2 above the thermal conductivity (k) units are W/(m.K) and the k values were measured using an Anacon 88 instrument at an average temperature of 23.85°C, the hot plate temperature being 37.7°C and the cold plate 10°C.

Samples were stored at 23-25°C and ca. 50% relative humidity.

Strength figures are in $kN/m^2$.

Density figures are in $kg/m^3$.

Example 2 & Comparative Test 3 - Laminated Foams

C. Resin Preparation

A phenolic resole was prepared in the conventional way. Aqueous formaldhyde (36.6%) (1.5 moles) was reacted with phenol (1 mole) using as a catalyst, sodium hydroxide (1.23% by weight of phenol charged).

The reaction mixture was heated to 60°C over a 40 minute period and held at 60°C for 30 minutes. The temperature was carefully increased to 80°C and held for 30 minutes. The temperature was again increased to permit a 40 minute reflux period. Water was then vacuum distilled to give a material with water content of 8.5%. It was then held at 70°C to give a material with a viscosity of 7290 centistokes at 25°C.

D. Laminated Foam Preparation.

The following resin formulations, in which all components listed are parts by weight, were used to prepare the laminate foams.

Table 3

| Formulation | Comparative Test 3 | Example 2 |
|---|---|---|
| Phenol formaldehyde resin | 100 | 100 |
| Monoethylene glycol | 17.5 | 11.3 |
| Nylonate Ester | / | 6.2 |
| Castor oil ethoxylate X | 2.5 | / |
| Castor oil ethoxylate Y | / | 2.5 |
| Castor oil ethoxylate Z | 5 | 5 |
| CFC 113 | 12.5 | 12.5 |
| HCFC-123 | 6.25 | 6.25 |
| Acid curing agent | 22 | 22 |

For key to the components in this Table 3, refer to footnote under Table 1 above.

The simulated laminate foams were prepared in the laboratory as follows:-

The phenolic resole described in Section C above was conditioned to 25°C. The cell stabilisers and solvents were then added and dispersed. The blowing agents, pre-blended, were added and mixed to form an emulsion. The acid curing agent, 50% sulphuric acid, was then added to the above emulsion, and after mixing, the mixture was poured into a mould, 22cm x 22cm x 10cm, and placed in an oven at 60°C for 1 hour to allow the foam to rise and cure.

One day after production, the foam was cur up and k-factor monitoring begun. The following results were obtained upon measuring the k-values as previously described.

| Foam from Formulation | k-value at 10 days |
|---|---|
| Comparative Test 3 | >0.020 |
| Repeat of Comparative Test 3 | >0.020 |
| Example 2 | <0.020 |

E. Semiscale Trials (Examples 3 and 4)

For these trials the resin blend and additives used were the same as described in Table 3 above except that the monoethylene glycol, and the stabilisers Y and Z were added in the same ratios as in Table 3 at the end of the reaction. The variations in the blowing agent used is shown below.

| Formulation | Example 3 | Example 4 |
|---|---|---|
| Phenol-formaldehyde resin | 100 | 100 |
| HCFC-123 | 15 | - |
| HCFC-141B | - | 10.9 |
| Acid curing agent | 25 | 25 |

Acid curing agent used was 55% $H_2SO_4$

Resin, blowing agent and acid hardener were simultaneously fed to a mixer, the resultant mixture being deposited into a metal mould - 65cm x 65cm x 7.5cm - which had been pre-heated for at least one hour in an oven at 60°C. The mould was returned to the oven for 1 hour, removed and allowed time to cool. The foam was then de-moulded and cut for testing. The results are tabulated below:

| | k-value |
|---|---|
| Example 3 | 0.0180 |
| Example 4 | 0.0185 |

Full Scale Laminated Foam Preparation

Example 4 and Comparative Test 4

(General Procedure)

The phenolic resin and other additives used for this procedure was the same as that shown in Table 3 above except as shown below,

| Formulation | Parts By Weight | |
|---|---|---|
| | Comparative Test 4 | Example 5 |
| HCFC-123 | - | 7.5 |
| CFC-113 | 7.5 | 6.2 |
| *CFC-113/CFC-114 | 7.5 | - |
| Acid Hardener | 22.5 | 22.5 |

[*A belnd of CFC-113 with CFC-114 in the ratio of 65:35]

Acid Hardener is 57.5% $H_2SO_4$.

Continuous phenolic foam laminate was prepared using a phenolic laminator as described below. The foam components were continuously fed to a mixer and applied onto a facing of glass-tissue. Even coverage was achieved by traversing the mix head and passing the substrate over heated plattens, and under a heated carpet as described in our published EP-A-154452, (cf. Example 7). The curing mixture was then passed down a rubber belted conveyor press, heated at between 65-70°C, to allow the foam to be firm enough to be cut and handled.

The cut laminate boards were stored for a minimum of 3 days at ambient temperature prior to sampling for test purposes. Product samples cut from the laminate were tested unfaced. (Core Samples).

The results are tabulated below:

|  | k-value after 80 days ageing at 60°C |
| --- | --- |
| Comparative Test 4 | <0.020 |
| Example 5 | <0.020 |

From the above it is apparent that there is no loss of efficiency or performance of the foam using a more user friendly and environmentally safe HCFC's.

## Claims

1. Phenolic foams of low thermal conductivity derivable from a foam system comprising a phenolic resin, a blowing agent, a hardener, a cell stabiliser and a solvent compatible with the resin, characterised in that the blowing agent comprises a partially halogenated hydrocarbon selected from dichlorotrifluoroethane (HCFC 123) and dichlorofluoroethane (HCFC 141B).

2. Phenolic foams according to claim 1 characterised in that the cell stabiliser comprises an alkoxylated derivative of
(a) unmodified or
(b) hydrogenated, whether fully or partially,
castor oil whereby the foam system is such that the HCFC blowing agent has relatively low solubility in the phenolic resin.

3. A process for the production of phenolic foams of low thermal conductivity by curing a foam system comprising a phenolic resin, a blowing agent, a hardener, a cell stabilizer and a solvent compatible with the resin, characterised in that the blowing agent comprises a partially halogenated hydrocarbon selected from dichlorotrifluoroethane (HCFC 123) and dichlorofluoroethane (HCFC 141B), and the cell stabilizer comprises an alkoxylated derivative of
(a) unmodified or
(b) hydrogenated, whether fully or partially,
castor oil whereby the foam system is such that the HCFC blowing agent has relatively low solubility in the phenolic resin.

4. A process according to claim 3, wherein the blowing agent HCFC is used alone or as a blend thereof with other chlorofluorocarbons such that a blend contains at least 30%w/w of HCFC.

5. A process according to any one of the preceding claims 3-4 wherein the solvent compatible with the resin is a dialkylcarbonate or a diester of a dicarboxylic acid.

6. A process according to claim 5 wherein the dicarboxylic acid is selected from malonic, succinic, fumaric, adipic, glutaric and succinic acids and mixtures thereof.

7. A process according to claim 5 or 6 wherein the diester is a blend of the dimethyl esters of succinic, glutaric and adipic acids in a weight ratio of 15-25:55-65:10-20 respectively.

8. A process according to any one of the preceding claims 3-7 wherein the hardener is an aqueous mineral acid.

9. A process according to any one of the preceding claims 3-8 wherein the total compatible solvent content of the reaction mixture inclusive of the water or other solvents present in the phenolic resin and the water present in the hardener is from 7-35%w/w.

10. A process according to claim 9 wherein the amount of water in the total compatible solvent is at least 40%w/w.

11. A process according to any one of the preceding claims 3-10 wherein the alkoxylate of unmodified castor oil or its hydrogenated derivative contains from 40-80 moles of ethylene oxide units per mole of castor oil.

12. A process according to any one of the preceding claims 3-11 wherein the curing is effected by maintaining the temperature within the mass of the curing resin mixture at or below 85°C for at least 6 hours after the curing phase has been initiated.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | EP-A-0 229 877  (ALLIED CORP.) <br> * Claims 1-4; page 7, table I * | 1 | C 08 J    9/14 // <br> (C 08 L   61/06 <br> C 08 L   71:02 ) |
| Y | | 2-6,8- 12 | |
| Y | EP-A-0 170 357  (BP CHEMICAL) <br> * Claims 1,3-5,7-14 * | 2-5,8- 12 | |
| Y | US-A-4 273 179  (GARDITES) <br> * Claims 1-10; column 4, lines 30-42 * | 6 | |
| A | EP-A-0 147 883  (JANSSEN PHARMACEUTICAL) <br> * Page 5: "Experimental part", especially lines 31-33 * | 7 | |

TECHNICAL FIELDS
SEARCHED (Int. Cl.4)

C 08 J

The present search report has been drawn up for all claims

| Place of search | Date of completion of the search | Examiner |
|---|---|---|
| THE HAGUE | 23-08-1989 | OUDOT R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)